# FASCICULE DE BREVET EUROPEEN

(11) **EP 0 575 245 B1**
(45) Date de publication et mention de la délivrance du brevet: **30.10.1996**
(21) Numéro de dépôt: 93401534.8
(22) Date de dépôt: 16.06.1993
(51) Int. Cl.: B01D 53/10, B01D 53/34, B01D 46/34

(54) **Dispositif pour le traitement d'un gaz par mise en contact avec des matières solides**
Vorrichtung zur Gasbehandlung durch in Kontakt bringen mit Feststoffen
Apparatus for treating a gas by contacting with solid materials

(30) Priorité: 17.06.1992 FR 9207337
(43) Date de publication de la demande: 22.12.1993
(73) Titulaire: PROCEDAIR SA, F-78100 Saint-Germain-en-Laye (FR)
(72) Inventeur: Melchior, Henri, F-78100 Saint-Germain-en-Laye (FR); Guibet, Jean-Pierre, F-78100 Saint-Germain-en-Laye (FR)
(74) Mandataire: Fontanié, Etienne

(56) Documents cités:
- EP-A- 0 027 398
- FR-A- 2 387 073
- FR-A- 2 626 192
- US-A- 4 191 544

## Description

La présente invention concerne les installations pour le traitement d'un gaz par mise en contact d'un courant de ce gaz avec des particules de matières solides, du type tel que défini dans le préambule de la revendication 1.

Le traitement en question a pour but, en général, de débarrasser les gaz des poussières qui viennent se fixer sur les particules et/ou des composés gazeux qui sont adsorbés par les particules ou se combinent chimiquement à celles-ci.

Un tel traitement est utilisé, en particulier, pour épurer les fumées émises par les cuves d'électrolyse pour la production d'aluminium qui sont chargées en composés fluorés sous forme de gaz et de poussières ultra-fines résultant d'une sublimation des produits fluorés contenus dans la charge traitée dans les cuves. Le traitement s'effectue par mise en contact des fumées avec des particules d'alumine dont une fraction est ensuite recyclée dans le réacteur, l'autre fraction étant envoyée dans les cuves d'électrolyse.

Dans les installations connues, le renvoi vers le réacteur de la fraction des particules recyclées est réalisé par des moyens de manutention qui peuvent être source d'attrition pour les particules avec comme conséquence l'augmentation de la proportion de fines et la diminution de l'efficacité de captation des particules. Par ailleurs, l'introduction des particules fraîches et recyclées dans la colonne de réaction est concentrée en un ou deux points de sa périphérie (cf. US-A-4 191 544) et, pour éviter que les particules ne tombent dans le bas de la colonne, on est obligé de faire circuler les gaz à traiter à vitesse relativement élevée au niveau du ou des points d'introduction ce qui augmente les pertes de charge.

Le but de la présente invention est d'éliminer ces inconvénients des installations connues et d'améliorer leurs performances.

Le dispositif objet de la présente invention est caractérisé en ce que l'extrémité inférieure du réacteur est ouverte et espacée verticalement du fond du lit fluidisé de façon à laisser subsister un passage annulaire permettant l'entrée des particules du lit dans le réacteur, et en ce que le conduit d'amenée du gaz pénètre dans la partie inférieure du réacteur et son extrémité supérieure se trouve approximativement au niveau de la surface libre du lit fluidisé, de telle sorte que les particules du lit fluidisé puissent se déverser par débordement dans ledit conduit.

Le réacteur a la forme d'une tuyère convergente-divergente, et l'extrémité supérieure du conduit d'amenée du gaz à traiter est située approximativement au niveau du col du réacteur.

Le conduit et la partie inférieure du réacteur définissent dans le récipient contenant le lit fluidisé deux volumes à section annulaire, concentriques et communiquant entre eux par leur base, et des compartiments de fluidisation distincts peuvent être associés à chacun de ces volumes et peuvent être alimentés en air comprimé sous des pressions réglables.

Lorsque le débit total des particules séparées du courant de gaz, après traitement, est collecté dans le récipient contenant le lit fluidisé, celui-ci est équipé d'un trop-plein, et le débit de la fraction des particules recyclées est réglé en ajustant la hauteur du seuil du trop-plein et la pression de l'air de fluidisation de la partie du lit comprise entre le conduit d'amenée du gaz à traiter et la base du réacteur.

Dans le cas du traitement des fumées des cuves d'électrolyse pour la production d'aluminium, la fraction des particules d'alumine déversée du lit fluidisé par le trop-plein est transportée jusqu'aux cuves par des moyens de manutention classiques. Le débit moyen de cette fraction des particules est évidemment égal au débit moyen des particules d'alumine fraîche que l'on introduit dans le réacteur; donc indépendant de la hauteur du seuil du trop-plein et de la pression de l'air de fluidisation de la partie du lit extérieure à la base du réacteur.

Les particules de matière fraîche seront, de préférence, introduites dans le réacteur au moyen d'un tube disposé coaxialement à l'intérieur du conduit d'amenée du gaz à traiter et débouchant approximativement au même niveau; les particules seront transportées, par exemple, pneumatiquement dans ce tube au moyen d'air comprimé ou d'air ambiant aspiré par la dépression régnant dans le réacteur.

Selon une forme de réalisation préférée, le récipient contenant le lit fluidisé est constitué par la partie inférieure d'une trémie faisant partie intégrante du dispositif séparateur, et où les particules séparées sont collectées, et un espace est ménagé dans ce dernier pour loger la partie supérieure du réacteur. En particulier, si le dispositif séparateur est un filtre à poches ou à manches, on prévoit un espace libre, démuni d'éléments filtrants, pour loger l'extrémité supérieure du réacteur; des ouvertures latérales pourront être prévues dans cette partie du réacteur pour favoriser la répartition des gaz traités vers les éléments filtrants.

D'autres caractéristiques de l'invention apparaîtront à la lecture de la description qui suit et se réfère aux dessins l'accompagnant qui montrent, à titre d'exemples non limitatifs, deux formes de réalisation de l'invention. Sur ces dessins :
La figure 1 est une représentation, en coupe verticale, d'un dispositif de traitement des gaz émis par les cuves d'électrolyse pour la production d'aluminium réalisé conformément à l'invention, et
La figure 2 illustre une variante de réalisation.

Ce dispositif est constitué par un filtre à poches ou à manches 10, équipé d'une trémie 12 où sont collectées les particules séparées du courant de gaz traité, et un réacteur 14 placé à l'intérieur du filtre.

Le fond 15 de la trémie 12 est perméable à l'air et un caisson 16 placé sous le fond est alimenté en air comprimé pour maintenir en état de fluidisation les particules contenues dans la partie inférieure de la trémie. Le caisson 16 est divisé par des cloisons verticales en plusieurs compartiments alimentés séparément en air comprimé par des tuyaux 18 munis de vannes 20 permettant un réglage individuel de la pression dans chacun des compartiments.

Le réacteur 14 est constitué par un tronçon de conduite formant une tuyère convergente-divergente et disposé verticalement de telle sorte que sa base plonge dans le lit fluidisé des particules se trouvant dans la partie inférieure de la trémie, en laissant subsister un passage annulaire entre son bord inférieur et le fond de la trémie.

La partie supérieure du réacteur est logée dans la partie centrale du filtre 10 qui est dépourvue d'éléments filtrants.

Des ouvertures latérales 22 sont prévues à l'extrémité supérieure du réacteur pour assurer la répartition des gaz entre les éléments filtrants 24.

Les gaz à traiter sont amenés dans le réacteur par un conduit vertical 26, dont le diamètre est inférieur à celui de la base du réacteur, qui est disposé coaxialement à ce dernier et pénétre dans sa partie inférieure, à travers le fond de la trémie. L'extrémité supérieure du conduit 26 se trouve approximativement au niveau du col 28 du réacteur.

Un tube 30, coaxial au conduit 26, permet d'introduire l'alumine fraîche dans le réacteur; elle est amenée par une aéroglissière 32 au bas du tube 30 et transportée pneumatiquement jusqu'à l'extrémité supérieure de ce dernier, qui se situe approximativement au même niveau que l'extrémité du conduit 26, par l'air ambiant circulant dans le tube sous l'effet de la dépression qui règne dans le réacteur.

L'extrémité du conduit 26 est rétrécie de telle sorte que les gaz aient à ce niveau une vitesse suffisante pour entraîner, d'une part, les particules d'alumine fraîche amenées par le tube 30 et, d'autre part, les particules du lit fluidisé contenues dans la trémie qui ont tendance à se déverser par débordement dans le conduit.

La trémie 12 est équipée d'un trop-plein 34 à seuil ajustable permettant de régler la hauteur du lit de particules fluidisé dont la densité est fonction du débit d'air comprimé admis dans les différents compartiments du caisson 16. On peut régler le débit des particules recyclées dans le réacteur en réglant la hauteur et la densité du lit fluidisé, donc en jouant parallèlement sur la hauteur du trop-plein et sur la pression dans le ou les compartiments du caisson de fluidisation placés sous le volume à section annulaire compris entre la base du réacteur et le conduit 26.

Dans le réacteur, les poussières et l'acide fluorhydrique contenus dans le gaz à traiter se fixent sur les particules d'alumine. Lorsque le gaz sort du réacteur, par son extrémité supérieure et par les ouvertures 22, sa vitesse diminue de manière à éliminer tout risque d'abrasion des tissus ou des parois. Les particules sont arrêtées par les éléments filtrants 24 sur lesquels elles se rassemblent. Périodiquement, on procède au nettoyage des éléments filtrants, de façon classique, pour en détacher les particules qui tombent dans la trémie. Les gaz traités sont évacués par la sortie 36 du filtre.

Les particules évacuées par le trop-plein 34 sont envoyées dans les cuves d'électrolyse.

Le dispositif de l'invention permet le recyclage direct des particules d'alumine vers le réacteur sans aucune manutention et, par conséquent, réduit les risques de formation de fines.

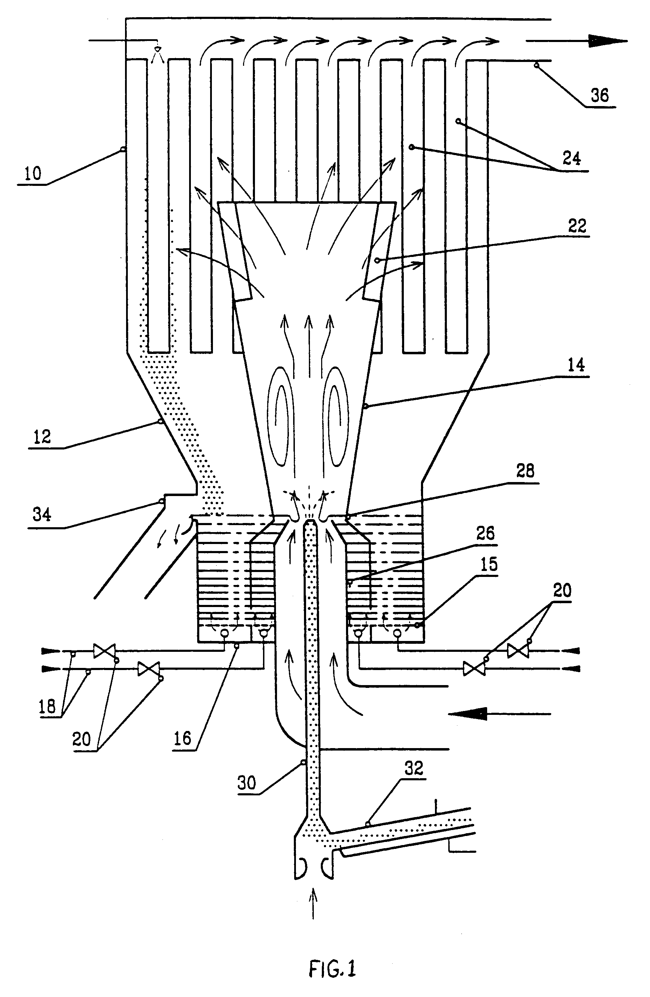

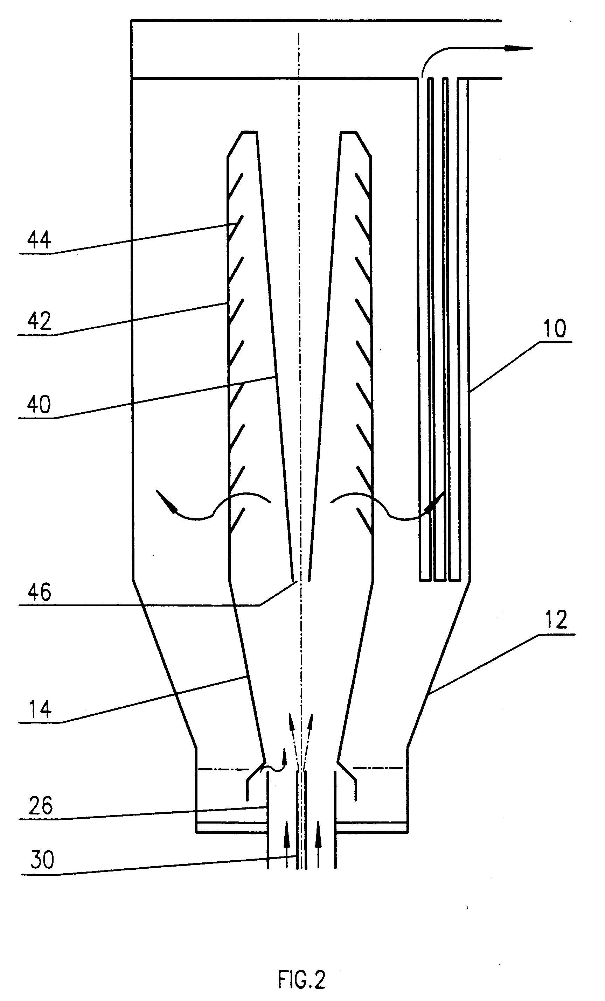

La figure 2 montre une forme de réalisation modifiée dans laquelle l'extrémité supérieure du réacteur est raccordée à un distributeur qui assure une meilleure répartition des gaz chargés des particules solides entre les éléments filtrants. Sur cette figure, les éléments équivalents à ceux du dispositif de la figure 1 sont désignés par les mêmes numéros de référence, et les dispositifs annexes, tels que l'alimentation en air comprimé, l'alimentation en alumine fraîche et le trop-plein d'évacuation, de même que les éléments filtrants n'ont pas été représentés.

Le distributeur 40 a la forme d'un V dont les deux branches, qui sont creuses, sont munies sur leur face extérieure d'ouvertures 42 équipées de déflecteurs 44 qui divisent le courant gazeux en plusieurs courants élémentaires et les dévie vers le bas. Une ouverture centrale 46 est ménagée entre les deux branches du V.

Il est bien entendu que l'invention n'est pas limitée à la forme de réalisation décrite mais englobe toutes les variantes résultant de l'emploi de moyens techniques équivalents. On pourra, en particulier, utiliser un dispositif séparateur autre qu'un filtre à tissu, par exemple une combinaison de plusieurs séparateurs: cyclone, filtre à tissu, électrofiltre.

## Revendications

1. Dispositif pour le traitement d'un gaz par mise en contact avec des particules de matières solides, comportant un réacteur vertical (14) dont la partie inférieure est immergée dans un lit de particules à l'état fluidisé et qui est mis en communication avec ledit lit pour permettre la mise en suspension des particules dans le courant de gaz qui est amené dans le réacteur, par le bas, au moyen d'un conduit vertical (26) traversant le fond (15) du récipient (12) contenant le lit fluidisé, des moyens (10) pour séparer les particules du courant de gaz à la sortie du réacteur, et des moyens pour renvoyer dans le lit au moins une fraction des particules séparées, caractérisé en ce que l'extrémité inférieure du réacteur (14) est ouverte et espacée verticalement du fond du lit fluidisé de façon à laisser subsister un passage annulaire permettant l'entrée des particules du lit dans le réacteur, et en ce que le conduit d'amenée du gaz (26) pénètre dans la partie inférieure du réacteur et son extrémité supérieure se trouve approximativement au niveau de la surface libre du lit fluidisé, de telle sorte que les particules du lit fluidisé puissent se déverser par débordement dans ledit conduit.

2. Dispositif selon la revendication 1, caractérisé en ce que le réacteur (14) a la forme d'une tuyère convergente-divergente, et l'extrémité supérieure du conduit d'amenée du gaz à traiter (26) est située approximativement au niveau du col (28) du réacteur.

3. Dispositif selon la revendication 1 ou 2, caractérisé en ce que le conduit d'amenée du gaz à traiter (26) et la partie inférieure du réacteur (14) définissent dans le récipient (12) contenant le lit fluidisé deux volumes à section annulaire, concentriques et communiquant entre eux par leur base, et un caisson de fluidisation (16) est placé sous le fond dudit récipient et divisé en au moins deux compartiments, chaque compartiment étant associé à un de ces volumes et étant alimenté en air comprimé sous une pression réglable.

4. Dispositif selon la revendication 1, 2 ou 3, caractérisé en ce que ledit récipient est muni d'un trop-plein à seuil réglable (34).

5. Dispositif selon la revendication 3 et 4, caractérisé en ce qu'il comporte des moyens de réglage du débit des particules introduites dans le réacteur comprenant des moyens de commande du seuil du trop-plein et des moyens pour régler les débits d'air comprimé alimentant les compartiments du caisson de fluidisation (10).

6. Dispositif selon la revendication 1, 2, 3, 4 ou 5 caractérisé en ce qu'il comporte un tube (30) disposé coaxialement au conduit d'amenée du gaz à traiter (26) et débouchant approximativement au même niveau que celui-ci dans le réacteur (14) pour alimenter le réacteur en particules fraîches.

7. Dispositif selon l'une quelconque des revendications 1 à 6, caractérisé en ce que le récipient contenant le lit fluidisé est constitué par la partie inférieure d'une trémie (12) faisant partie intégrante d'un séparateur (10) et où les particules séparées sont collectées, et un espace est ménagé dans ledit séparateur pour loger la partie supérieure du réacteur (14).

8. Dispositif selon la revendication 7, caractérisé en ce que ledit séparateur est un filtre du type à poches ou à manches (10) et en ce que la partie supérieure du réacteur (14) est logée dans la partie centrale du filtre, qui est dépourvue d'éléments filtrants, et comporte des ouvertures latérales (22) assurant la répartition du gaz entre les éléments filtrants.

9. Dispositif selon la revendication 7, caractérisé en ce que ledit séparateur est un filtre du type à poches ou à manches (10) et en ce qu'un distributeur (40) est raccordé à l'extrémité supérieur du réacteur et comporte des ouvertures latérales (42) et des déflecteurs (44) assurant la répartition du gaz entre les éléments filtrants.

## Claims

1. Device for treating a gas by putting it into contact with particles of solid materials, said device including a vertical reactor (14) the lower part of which is submerged in a fluidized bed of particles and which communicates with the said bed so that the particles may be put in suspension in the gas stream that is conveyed upward into the reactor by means of a vertical duct (26) running through the bottom (15) of the fluidized bed container (12), means (10) for separating the particles from the gas stream at the reactor outlet, and means for recirculating to the bed at least a fraction of the separated particles, characterized in that the lower end of the reactor (14) is open and vertically spaced out of the bottom of the fluidized bed so as to leave a ring-shaped passage which permits the particles of the bed to enter the reactor, and in that the gas supply duct (26) enters the lower part of the reactor and its top end is approximately level with the free surface of the fluidized bed, so that the particles of the fluidized bed may overflow into the said duct.

2. Device according to claim 1, characterized in that the reactor (14) is shaped like a convergent-divergent nozzle, and the top end of the gas-to-be-treated supply duct (26) is approximately level with the neck (28) of the reactor.

3. Device according to claim 1 or 2, characterized in that the gas-to-be-treated supply duct (26) and the lower part of the reactor (14) divide the fluidized bed container (12) into two concentric annular-section volumes which communicate with each other at their lower part, and a fluidizing casing (16) is placed under the bottom of the said container and divided into two compartments, as a minimum, each compartment being associated with one of the said volumes and fed with compressed air at an adjustable pressure.

4. Device according to claim 1, 2 or 3, characterized in that the said container is provided with an adjustable-threshold overflow (34).

5. Device according to claims 3 and 4, characterized in that it is provided with means for adjusting the rate of flow of the particles introduced into the reactor which include means for controlling the overflow threshold and means for adjusting the compressed air flowrates to the compartments of the fluidizing casing (16).

6. Device according to claim 1, 2, 3, 4 or 5 characterized in that it includes a tube (30) arranged coaxially with the gas-to-be-treated supply duct (26) and opening approximately at the same level as the latter in reactor (14) in order to feed the reactor with fresh particles.

7. Device according to any one of claims 1 to 6, characterized in that the fluidized bed container is constituted by the lower part of a hopper (12) which is an integral part of a separator (10) and in which the separated particles are collected, and a space is provided in the said separator to house the upper part of the reactor (14).

8. Device according to claim 7, characterized in that the said separator is a bag- or hose-type filter (10) and in that the upper part of the reactor (14) is housed in the central part of the filter, which has no filter elements, and is provided with side openings (22) which distribute the gas among the filter elements.

9. Device according to claim 7, characterized in that the said separator is a bag- or hose-type filter (10) and in that a distributor (40) is connected to the top end of the reactor and is provided with side openings (42) and defectors (44) which distribute the gas among the filter elements.

## Patentansprüche

1. Vorrichtung zur Behandlung von Gas, indem es mit Feststoffteilchen in Kontakt gebracht wird, bestehend aus einem vertikalen Reaktor (14), dessen unterer Teil in eine Wirbelschicht von Teilchen eingetaucht und mit dieser Schicht in Verbindung gebracht wird, um das Suspendieren der Teilchen in dem Gasstrom zu erlauben, der von unten her mittels einer den Boden (15) des die Wirbelschicht aufnehmenden Gefäßes (12) durchquerenden vertikalen Leitung (26) in den Reaktor eingeführt wird, Mitteln (10) zum Abscheiden der Teilchen aus dem Gasstrom am Austritt des Reaktors und Mitteln zur Rückführung mindestens eines Teils der abgeschiedenen Teilchen in die Wirbelschicht, dadurch gekennzeichnet, daß das untere Ende des Reaktors (14) offen und vertikal vom Boden der Wirbelschicht entfernt ist, um einen ringförmigen Durchgang zu lassen, welcher das Eintreten der Teilchen der Schicht in den Reaktor gestattet, daß die Gaszufuhrleitung (26) in das untere Ende des Reaktors einmündet, und daß sich ihr oberes Ende ungefähr auf der Höhe der freien Oberfläche der Wirbelschicht befindet, sodaß die Teilchen des Wirbelbettes durch Überströmung in besagte Leitung gelangen können.

2. Vorrichtung gemäß Anspruch 1, dadurch gekennzeichnet, daß der Reaktor (14) die Form einer konvergeten-divergenten Düse hat, und daß sich die Rohgaszufuhrleitung (26) ungefähr auf der Höhe des Halses (28) des Reaktors befindet.

3. Vorrichtung gemäß Anspruch 1 oder 2, dadurch gekennzeichnet, daß die Rohgaszufuhrleitung (26) und der untere Teil des Reaktors (14) in dem die Wirbelschicht enthaltenen Gefäß (12) zwei konzentrische, unten miteinander in Verbindung stehende Volumen ringförmigen Querschnitts abgrenzen, und daß unter dem Boden besagten Gefäßes ein Wirbelkasten (16) angeordnet ist, der in mindestens zwei Kammern unterteilt ist, wobei jede Kammer einem dieser Volumen zugeordnet ist und von Druckluft mit einstellbarem Druck gespeist wird.

4. Vorrichtung gemäß Anspruch 1, 2 oder 3, dadurch gekennzeichnet, daß besagtes Gefäß mit einem Überlauf mit einstellbarer Schwelle (34) versehen ist.

5. Vorrichtung gemäß Anspruch 3 oder 4, dadurch gekennzeichnet, daß sie mit Mitteln zur Regelung des in den Reaktor eingeführten Teilchenstroms versehen ist, welche Mittel zur Steuerung der Überlaufschwelle und Mittel zur Einstellung der dem Wirbelkasten (16) zugeführten Druckluftmenge umfassen.

6. Vorrichtung gemäß Anspruch 1, 2, 3, 4 oder 5, dadurch gekennzeichnet, daß sie ein koaxial zu besagter Rohgaszufuhrleitung (26) angeordnetes Rohr (30) umfaßt, das ungefähr auf derselben Höhe wie letztere in den Reaktor (14) einmündet, um den Reaktor mit Frischteilchen zu beschicken.

7. Vorrichtung gemäß irgendeinem der Ansprüche 1 - 6, dadurch gekennzeichnet, daß das die Wirbelschicht aufnehmende Gefäß vom unteren Teil eines Trichters (12) gebildet wird, welcher Bestandteil eines Abscheiders (10) ist, und in dem die abgeschiedenen Teilchen gesammelt werden, und daß in besagtem Abscheider ein Platz zur Aufnahme des oberen Teils des Reaktors (14) vorgesehen ist.

8. Vorrichtung gemäß Anspruch 7, dadurch gekennzeichnet, daß besagter Abscheider ein Schlauch- bzw. Beutelfilter (10) ist, und daß der Oberteil des Reaktors (14) im mittleren Teil des Filters, in dem sich keine Filterelemente befinden, gelagert ist und seitliche Öffnungen (22) enthält, die die Aufteilung des Gasstroms zwischen den Filterelementen sichern.

9. Vorrichtung gemäß Anspruch 7, dadurch gekennzeichnet, daß besagter Abscheider ein Schlauch- bzw. Beutelfilter ist und daß am oberen Teil des Reaktors ein Verteiler (40) angeschlossen ist, der mit seitlichen Öffnungen (42) und Umlenkblechen (44) versehen ist, welche die Gasverteilung zwischen den Filterelementen sichern.
